# EUROPÄISCHE PATENTSCHRIFT

(11) **EP 3 630 582 B1**
(45) Veröffentlichungstag und Bekanntmachung des Hinweises auf die Patenterteilung: **31.03.2021**
(21) Anmeldenummer: 18727751.2
(22) Anmeldetag: 22.05.2018
(51) Int. Cl.: B62D 15/02, B60K 35/00, B62D 1/04, B62D 1/06

(54) **FAHRSYSTEM ZUM AUTOMATISIERTEN FAHREN MIT MITTELN ZUM MARKIEREN VON BEREICHEN AM LENKRAD UND ENTSPRECHENDES VERFAHREN**
TRAVEL SYSTEM FOR AUTOMATIC DRIVING WITH MEANS TO MARK STEERING WHEEL SECTORS AND A CORRESPONDING METHOD
SYSTÈME POUR UNE CONDUITE AUTOMATIQUE AVEC DES MOYENS DE MARQUAGES DE SECTEURS SUR LE VOLANT ET UN PROCÉDÉ CORRESPONDANT

(30) Priorität: 23.05.2017 DE 102017208762
(43) Veröffentlichungstag der Anmeldung: 08.04.2020
(73) Patentinhaber: Bayerische Motoren Werke Aktiengesellschaft, 80809 München (DE)
(72) Erfinder: BREISINGER, Marc, 80799 München (DE); BROY, Nora, 81539 München (DE); EICHHORN, Julian, 80639 München (DE); HERGETH, Sebastian, 80804 München (DE); KERSCHBAUM, Philipp, 80339 München (DE); KÜNZNER, Hermann, 85356 Freising (DE); LORENZ, Lutz, 81539 München (DE); MÜLLER, Stephan, 80335 München (DE); NIEMANN, Julia, 12161 Berlin (DE); PLATTEN, Frederik, 80333 München (DE); SPIESSL, Wolfgang, 80807 München (DE); SÜSSENGUTH, Philipp, 81247 München (DE)
(86) Internationale Anmeldenummer: PCT/EP2018/063345
(87) Internationale Veröffentlichungsnummer: WO 2018/215438

(56) Entgegenhaltungen:
- EP-A1- 3 124 352
- WO-A1-2016/014692
- DE-A1-102014 118 958
- US-B1- 8 260 482

## Beschreibung

Die Erfindung betrifft ein Fahrsystem zum automatisierten Fahren für ein Kraftfahrzeug, insbesondere Personenkraftwagen, und ein Anzeigeverfahren für ein Fahrsystem zum automatisierten Fahren.

Unter dem Begriff "automatisiertes Fahren" kann im Rahmen des Dokuments ein Fahren mit automatisierter Längs- oder Querführung oder ein autonomes Fahren mit automatisierter Längs- und Querführung verstanden werden. Bei dem automatisierten Fahren im Sinne der Anmeldung handelt es sich typischerweise um ein zeitlich längeres Fahren, beispielsweise auf der Autobahn. Der Begriff "automatisiertes Fahren" umfasst ein automatisiertes Fahren mit einem beliebigen Automatisierungsgrad, bei dem Fahrer vor einem bevorstehende Ende des automatisierten Fahrens in der Lage sein muss, die Fahraufgabe teilweise oder vollständig zu übernehmen.

Beispielhafte Automatisierungsgrade sind ein assistiertes, teilautomatisiertes, hochautomatisiertes oder vollautomatisiertes Fahren, insbesondere das hochautomatisierte und das vollautomatisierte Fahren. Diese Automatisierungsgrade wurden von der Bundesanstalt für Straßenwesen (BASt) definiert (siehe BASt-Publikation "Forschung kompakt", Ausgabe 11/2012). Beim assistierten Fahren führt der Fahrer dauerhaft die Längs- oder Querführung aus, während das System die jeweils andere Funktion in gewissen Grenzen übernimmt. Beim teilautomatisierten Fahren (TAF) übernimmt das System die Längs- und Querführung für einen gewissen Zeitraum und/oder in spezifischen Situationen, wobei der Fahrer das System wie beim assistierten Fahren dauerhaft überwachen muss. Beim hochautomatisierten Fahren (HAF) übernimmt das System die Längs- und Querführung für einen gewissen Zeitraum, ohne dass der Fahrer das System dauerhaft überwachen muss; der Fahrer muss aber in einer gewissen Zeit in der Lage sein, die Fahrzeugführung zu übernehmen. Beim vollautomatisierten Fahren (VAF) kann das System für einen spezifischen Anwendungsfall das Fahren in allen Situationen automatisch bewältigen; für diesen Anwendungsfall ist kein Fahrer mehr erforderlich. Die vorstehend genannten vier Automatisierungsgrade entsprechen den SAE-Level 1 bis 4 der Norm SAE J3016 (SAE - Society of Automotive Engineering). Beispielsweise entspricht das hochautomatisierte Fahren (HAF) Level 3 der Norm SAE J3016.

Fahrzeuge, die automatisiert fahren, können dies im Allgemeinen nicht unter allen Straßen- und Umweltbedingungen.

Beispielsweise kann es für ein Fahrsystem zum hochautomatisierten Fahren auf der Autobahn vorgesehen sein, dass das Fahrzeug nur auf für das hochautomatisierte Fahren freigegebenen Streckenabschnitten der Autobahn hochautomatisiert Fahren kann. Bevor das Ende eines aktuell befahrenen Streckenabschnitts erreicht wird, der für das hochautomatisierte Fahren freigegeben ist und danach kein hochautomatisiertes Fahren mehr möglich ist, muss der Fahrer die Fahrzeugführung im Allgemeinen vollständig, aber zumindest teilweise, übernehmen. Ein Ende der Automatisierungsstrecke kann sich auch aufgrund von aktuellen Ereignissen wie beispielsweise einem Unfall, einem Stau oder einer Person auf der Autobahn ergeben. Darüber hinaus muss der Fahrer bei solchen Fahrsystemen zum hochautomatisierten Fahren typischerweise vor dem Abfahren von der Autobahn auf einen anderen Straßentyp die Fahrzeugführung übernehmen.

Dadurch dass die Strecke zum automatisierten Fahren aus verschiedenen Gründen im Allgemeinen limitiert ist, besteht die Notwendigkeit, dass die Fahrzeugführung vom Fahrsystem rechtzeitig vor einem vorausliegenden Endpunkt für das automatisierte Fahren an den Fahrer übergeben wird. Es gibt verschiedene Ansätze, den Fahrer zur Übernahme der Fahrzeugführung aufzufordern, beispielsweise visuelle Warnungen auf einer Anzeige (z. B. auf einem Bildschirm), akustische Warnungen, haptische Warnungen durch haptische Signale.

Aus der Druckschrift DE 10 2011 112 134 A1 ist ein Lenkrad bekannt, dessen Lenkradkranz Lichtquellen aufweist. Bei Aktivieren des autonomen Fahrbetriebs des Fahrzeugs werden die Lichtquellen des Lenkradkranzes aktiviert.

Ferner beschreibt die Druckschrift DE 10 2013 012 779 A1 die Verwendung einer bogenförmigen Leuchteinheit im Lenkradkranz zur optischen Signalisierung der Aktivierung eines automatischen Fahrmodus und zur optischen Signalisierung einer Übernahmeaufforderung. Nach der Aktivierung des autonomen Fahrmodus leuchtet der Lenkradkranz beispielsweise grün. Bei Übergang in den manuellen Fahrbetrieb leuchtet der Lenkradkranz zunächst weiterhin grün und blinkt dabei. Wenn danach keine Übernahme erfolgt, leuchtet der Lenkradkranz rot. Nach der Fahrerübernahme leuchtet der Lenkradkranz blau.

Aus der Druckschrift DE 10 2007 052 258 A1 ist es bekannt, den Zustand der Querführung über einen Leuchtring am Lenkrad zu signalisieren. Bei deaktivierter Querführung leuchtet der Leuchtring rot. Im Bereitschaftszustand leuchtet der Leuchtring beispielsweise in gelber Farbe. Beim Übergang vom deaktivierten Zustand der Querführung in den aktivierten Zustand wechselt der Leuchtring auf die Farbe Grün. Bei einer Übernahmeaufforderung blinkt der Leuchtring in roter Farbe. EP 3 124 352 A1 offenbart ein gattungsgemässes Fahrsystem zum automatisierten Fahren.

Es ist Aufgabe der Erfindung, ein Fahrsystem mit einer Benutzerschnittstelle zur Signalisierung einer Übernahmeaufforderung anzugeben, welche dem Fahrer intuitiv die richtige Handlung zur Übernahme der Fahraufgabe vermittelt und seine Übernahmefähigkeit sicherstellt.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft ein Fahrsystem zum automatisierten Fahren mit zumindest automatisierter Querführung. Vorzugsweise werden sowohl die Längs- als auch die Querführung vom Fahrsystem durchgeführt.

Das Fahrsystem umfasst Mittel zum Markieren von Bereichen am Lenkrad, insbesondere am Lenkradkranz. Bei den Mitteln zum Markieren handelt es sich vorzugsweise um eine optische Lenkradanzeige, die beispielsweise im Lenkradkranz integriert ist. Vorzugsweise werden die Bereiche durch Leuchtelemente markiert, die vorzugsweise im Lenkradkranz angeordnet sind. Es ist aber auch möglich, dass im Pralltopf oder in den Lenkradspeichen Leuchtelemente integriert sind, die die zu markierenden Bereiche am Lenkradkranz anleuchten.

Es ist von Vorteil, wenn eine Lenkradanzeige mit einer Leuchtband-Struktur verwendet wird, die im Lenkradkranz integriert ist. Bei der Leuchtband-Struktur handelt es sich vorzugsweise um eine bogenartige Struktur, insbesondere um einen Ring. Der Ring ist bei einem Ausführungsbeispiel mit Vorteil vollständig geschlossen; es wäre aber auch denkbar, dass die Leuchtband-Struktur einem im oberen Bereich und/oder im unteren Bereich geöffnetem Ring entspricht. Die Leuchtbandstruktur kann gemäß einem anderen Ausführungsbeispiel statt als geschlossener Ring ein rechtes Leuchtband (insbesondere einen rechten Leuchtband-Bogen im Fall eines ringförmigen Lenkradkranzes) in der rechten Hälfte des Lenkradkranzes und ein linkes Leuchtband (insbesondere einen linken Leuchtband-Bogen im Fall eines ringförmigen Lenkradkranzes) in der linken Hälfte des Lenkradkranzes umfassen, die jeweils dazu dienen, einen rechten bzw. einen linken Markierungsbereich am Lenkradkranz zu markieren. Die Länge des zu markierenden linken und rechten Markierungsbereichs entspricht vorzugsweise der Länge des linken bzw. rechten Leuchtbandes, könnte aber auch kürzer sein.

Die Leuchtband-Struktur umfasst vorzugsweise mehrere nebeneinander angeordnete Leuchtelemente, deren Leuchtverhalten vorzugsweise einzeln steuerbar ist. Im Fall der Verwendung eines linken und eines rechten Leuchtbands (insbesondere linken und rechten Leuchtband-Bogens) umfasst jedes Leuchtband vorzugsweise eine Mehrzahl von Leuchtelemente. Vorzugsweise sind das linke und das rechte Leuchtband hinsichtlich des Leuchtens unterschiedlich steuerbar; in diesem Fall ist es weiter von Vorteil, wenn jedes Leuchtelement in dem jeweiligen linken und rechten Leuchtband einzeln steuerbar ist.

Das Fahrsystem ist eingerichtet, während des automatisierten Fahrens festzustellen, dass sich das Fahrzeug einem vorausliegenden Ende für das (aktuell durchgeführte) automatisierte Fahren derart genähert hat, dass eine erste Näherungsbedingung erfüllt ist. Beispielsweise entspricht die Näherungsbedingung der Bedingung, dass der längenbezogene oder zeitliche Abstand von der aktuellen Fahrzeugposition zu einem Endpunkt für das automatisierte Fahren kleiner oder kleiner gleich als ein bestimmter Schwellwert ist, beispielsweise ein Schwellwert im Bereich von 5 s bis 2 min (z. B. 20 s) im Fall eines zeitlichen Abstands oder beispielsweise ein Schwellwert im Bereich von 150 m bis 4 km (z. B. 700 m) im Fall eines längenbezogenen Abstands.

Die Näherungsbedingung kann auf einen Endpunkt der Strecke bezogen sein, hinter dem die Fahrstrecke nicht mehr für das automatisierte Fahren freigegeben ist. Die Näherungsbedingung kann alternativ beispielsweise auch auf einen davor liegenden Punkt bezogen sein, bis zu dem die Fahraufgabe tatsächlich an den Fahrer übergangen sein muss.

Information über das Ende kann beispielswiese in einer elektronischen Karte im Fahrzeug gespeichert sein oder über das Mobilfunk-Netz empfangen werden.

Sofern im Fahrzeug eine Zielführung des Navigationssystems aktiv ist und das Fahrzeug auf einer vom Navigationssystem berechneten Route fährt, kann das Fahrzeug den Fahrer nicht nur über einen Endpunkt für das automatisierte Fahren, der bei Weiterfahrt auf der aktuell befahrenen Straße (z. B. Autobahn) liegt, informieren, sondern auch über Endpunkte für das automatisierte Fahren, die sich bei einem Wechsel der aktuell befahrenen Straße auf der Route ergeben.

Wenn das System festgestellt hat, dass sich das Fahrzeug derart dem Ende des automatisierten Fahrens genähert hat, dass die Näherungsbedingung erfüllt ist, werden in Reaktion hierauf die Mittel zum Markieren von Bereichen am Lenkrad derart gesteuert, dass ein linker und ein rechter Markierungsbereich am Lenkrad markiert werden. Hierdurch wird der Fahrer angeregt, zur Übernahme der Fahraufgabe seine Hände an die markierten Bereiche des Lenkrads zu positionieren.

Das erfindungsgemäße Konzept, bei Annäherung an das Ende des automatisierten Fahrens Bereiche am Lenkrad zur Übernahme der Fahraufgabe zu markieren, erlaubt es, dem Fahrer intuitiv die richtige Handlung zur Übernahme der Fahraufgabe zu vermitteln und seine Übernahmefähigkeit sicherzustellen.

Es wird darauf hingewiesen, dass das automatisierte Fahren lediglich auch nur eine Fahrfunktion mit automatisierter Querführung ohne automatisierte Längsführung betreffen kann. In diesem Fall muss bei Ende des automatisierten Fahrens lediglich die Querführung vom Fahrer übernommen werden. Außerdem kann vorgesehen sein, dass bei Ende des automatisierten Fahrens mit Längs- und Querführung nicht die gesamte Fahrzeugführung übernommen werden muss, sondern nur die Querführung, da das Fahrsystem nach Ende der Fahrfunktion zum automatisierten Fahren die Längsführung durchführt.

Wie vorstehend erläutert, wird vorzugsweise eine Lenkradanzeige mit einer im Lenkradkranz integrierten Leuchtband-Struktur verwendet, wobei zum Markieren der beiden Bereiche im Lenkradkranz die Leuchtband-Struktur an dem linken und rechten Markierungsbereich des Lenkradkranzes leuchtet. Wenn sich vorher das Fahrzeug im automatisierten Fahrbetrieb befindet, leuchtet die Leuchtband-Struktur vorzugsweise als Ring oder stattdessen zumindest in Bereichen, die den linken und rechten Markierungsbereich umfassen und darüber hinausgehen. Hierbei kann die Leuchtfarbe auch unterschiedlich zu der Leuchtfarbe sein, die verwendet wird, wenn die beiden Bereiche des Lenkrads markiert werden.

Es ist von Vorteil, wenn das Fahrsystem eingerichtet ist, auch festzustellen, ob der Fahrer in Reaktion auf die Markierung der Lenkradbereiche das Lenkrad anfasst, d.h. die Hände an das Lenkrad nimmt. Hierzu kann beispielsweise eine im Lenkrad integrierte Hands-On-Sensorik verwendet werden, beispielsweise eine kapazitive Hands-On-Sensorik. Nach der Erfindung sofern festgestellt wurde, dass der Fahrer die Hände in Reaktion auf die Markierung der Lenkradbereiche an das Lenkrad nimmt, wird in Reaktion hierauf die Markierung der beiden Bereiche eingestellt (oder alternativ verändert, z. B. in der Farbe), um die Übergabe der Fahraufgabe an den Fahrer zu signalisieren. Es wird das automatisierte Fahren beendet und die Fahraufgabe übergeben. Diese Reaktion kann optional neben der Bedingung des Anlegens der Hände an das Lenkrad noch von einer oder mehreren Zusatzbedingungen abhängen, beispielsweise das Blicken des Fahrers auf das vorausliegende Verkehrsgeschehen (dies kann mit einer kamerabasierten Fahrerüberwachung festgestellt werden).

Nach der Erfindung kann das Fahrsystem feststellen und unterscheiden, ob der Fahrer das Lenkrad an einem bestimmten linken Bereich des Lenkrads, insbesondere an einem Bereich in der linken Hälfte des Lenkradkranzes, und/oder bestimmten rechten Bereich des Lenkrads, insbesondere an einem Bereich in der rechten Hälfte des Lenkradkranzes, anfasst, beispielsweise am linken und/oder rechten Markierungsbereich. Beispielsweise kann es bei einer ersten Ausgestaltung hiervon ausreichend sein, wenn der Fahrer das Lenkrad an einem linken oder rechten Bereich des Lenkrads, insbesondere am linken oder rechten Markierungsbereich, mit lediglich einer Hand anfasst. Es ist aber von Vorteil, wenn das Fahrsystem prüfen kann, ob der Fahrer das Lenkrad an einem linken und einem rechten Bereich, insbesondere am linken und am rechten Markierungsbereich, anfasst, d. h. eine Hand links am Lenkrad, insbesondere am linken Markierungsbereich, und die andere Hand rechts am Lenkrad, insbesondere am rechten Markierungsbereich, positioniert.

Sofern festgestellt wurde, dass der Fahrer bei der ersten Ausgestaltung zumindest einen der Bereiche links und rechts am Lenkrad, insbesondere einen markierten Bereich, berührt oder alternativ bei der zweiten Ausgestaltung beide Bereiche links und rechts am Lenkrad, insbesondere beide markierten Bereiche, berührt, wird vorzugsweise die Markierung der beiden markierten Bereiche eingestellt (oder alternativ verändert, z. B. die Leuchtfarbe verändert), um die Übergabe der Fahraufgabe an den Fahrer zu signalisieren, und die Fahraufgabe zu übergeben. Diese Reaktion kann optional neben der Bedingung des Anlegens der Hände an das Lenkrad noch von einer oder mehreren Zusatzbedingungen abhängen, beispielsweise das Blicken des Fahrers auf das vorausliegende Verkehrsgeschehen.

Nach der Erfindung sind zur Übernahme beide Hände am Lenkrad anzulegen. Es ist von Vorteil, dass bei Anlegen einer Hand an das Lenkrad die Markierung des dieser Hand zugeordneten markierten Bereichs eingestellt oder alternativ verändert wird, so dass dem Fahrer verdeutlicht wird, dass dieser noch die zweite Hand an das Lenkrad legen muss. Das Fahrsystem kann hierzu über eine geeignete Hands-On-Sensorik feststellen, ob der Fahrer das Lenkrad mit der linken Hand anfasst (beispielsweise indem festgestellt wird, dass der Fahrer einen bestimmten Bereich in der linken Hälfte des Lenkradkranzes berührt). Wenn dies festgestellt wird, wird in Reaktion hierauf die Markierung des linken Markierungsbereichs eingestellt. Alternativ könnte auch die Markierung des linken Markierungsbereichs verändert werden, beispielsweise die Markierungsfarbe von rot auf grün umschalten.

In entsprechender Weise kann mittels der Hands-On-Sensorik auch festgestellt werden, ob der Fahrer das Lenkrad mit der rechten Hand anfasst, wobei in Reaktion hierauf die Markierung des rechten Markierungsbereichs eingestellt oder verändert wird.

Wenn das Lenkrad nur mit einer Hand angefasst wird, wird also beispielsweise die Markierung des der Hand zugeordneten Markierungsbereichs deaktiviert (oder alternativ die Markierung verändert). Der andere Markierungsbereich bleibt weiterhin wie vorher markiert, solange der Fahrer das Lenkrad nicht mit beiden Händen anfasst. Dies signalisiert dem Fahrer, dass er zu Quittierung der Übernahmeaufforderung das Lenkrad auch noch mit der zweiten Hand anfassen muss. Erst das Anfassen des Lenkrads mit beiden Händen wird als Übernahme der Fahraufgabe gewertet.

Wenn der Fahrer das Lenkrad zunächst nur mit einer Hand anfasst, und dann festgestellt wird, dass er die Hand weggenommen wird, wird in Reaktion hierauf zurückgenommen, dass (vorher) die Markierung des der Hand zugeordneten Markierungsbereichs eingestellt wurde bzw. verändert wurde, d. h. die Wegnahme der Hand führt wieder in den Zustand zurück, in dem beide Markierungsbereiche wie vorher leuchten.

Zur Prüfung der Berührung des Lenkrads mit beiden Händen, insbesondere beider Markierungsbereiche, sind im Fall von kapazitiven Teilsensoren beispielsweise zwei nicht elektrisch verbundene getrennte Sensormatten im Lenkrad in der linken bzw. rechten Lenkradkranzhälfte, beispielsweise im linken Markierungsbereich bzw. rechten Markierungsbereich oder vorzugsweise noch darüber hinausgehend, integriert, wobei in einer Auswerte-Einheit ein für die Kapazität der ersten Sensormatte charakteristisches Signal und ein für die Kapazität der zweiten Sensormatte charakteristisches Signal ausgewertet werden, um festzustellen, ob der Fahrer mit beiden Händen das Lenkrad berührt, beispielsweise beide Markierungsbereiche berührt.

Es kann auch eine aufwändigere Hands-On-Sensorik verwendet werden, die den gesamten Lenkradkranz oder zumindest den größten Teil des Lenkradkranzes abdeckt, und mit der die genauere Lage der jeweiligen Hand am Lenkradkranz bestimmt werden kann.

Alternativ kann ein im Lenkrad integrierter erster Sensor, z. B. ein kapazitiver Sensor, und eine Kamera verwendet werden. Beispielsweise handelt es sich um eine im Fahrercockpit aus Sicht des Fahrers hinter dem Lenkrad angeordnete Kamera (beispielsweise im Bereich der Instrumentenkombination angeordnet), die auf den Fahrer gerichtet ist. Anhand eines Signals des ersten Sensors wird festgestellt, ob mindestens eine Hand am Lenkrad anliegt. Dies kann auf konventionelle Weise erfolgen. Anhand eines Videosignals der Kamera wird entschieden, ob - im Fall des Erkennens des Anliegens zumindest einer Hand am Lenkrad mittels des ersten Sensors - die Hände links und rechts, insbesondere am linken und rechten Markierungsbereich, am Lenkrad anliegen.

Es wird darauf hingewiesen, dass die von der Hands-On-Sensorik akzeptierten Berührbereiche des Lenkrads vorzugsweise größer, insbesondere etwas größer, als die markierten Bereiche sind; in diesem Fall erfolgt auch bei Berühren des Lenkrads neben den markierten Bereichen, insbesondere unmittelbar neben den markierten Bereichen, eine Übergabe der Fahraufgabe an den Fahrer.

Es ist von Vorteil, wenn bereits vor der Markierung der beiden Markierungsbereiche am Lenkrad mittels der Leuchtband-Struktur die Entfernung zu dem Endpunkt für das automatisierten in der Form signalisiert wird, dass bei sukzessiv abnehmender Entfernung zu dem Endpunkt für das automatisierte Fahren der linke und der rechte Teil der Leuchtband-Struktur jeweils mit sukzessiv abnehmender Länge ähnlich einem Countdown leuchten. Hierbei nimmt die Beleuchtung ausgehend vom oberen und/oder unteren Bereich der Leuchtband-Struktur ab. Die Länge der beleuchteten Bereiche wird sukzessive auf eine definierte minimale Länge reduziert, wobei die leuchtenden Bereiche minimaler Länge des linken und des rechten Teils dann dem linken und dem rechten Markierungsbereich entsprechen. Hierbei kann zur Markierung der Markierungsbereiche die Leuchtfarbe auf eine Farbe mit einem höheren Warncharakter geändert werden (z. B. von blau auf gelb oder rot) und/oder von einem Dauerleuchten auf ein Leuchten mit alternierender Leuchtintensität (z. B. blinken, blitzen, pulsieren) umgeschaltet werden.

Der Countdown in Form der Abnahme der Länge der beleuchten Bereiche startet dann, wenn sich das Fahrzeug dem vorausliegenden Ende des automatisierten Fahrens derart genähert hat, dass eine zweite Näherungsbedingung erfüllt ist. Die zweite Näherungsbedingung ist bei Annäherung an das Ende des automatisierten Fahrens bereits früher erfüllt als die erste Näherungsbedingung, deren Erfüllen das Markieren der beiden Lenkradbereiche auslöst.

Bei einem bevorzugten Ausführungsbeispiel der Erfindung werden am Lenkrad durch Leuchtelemente die Bereiche markiert, wo die Hände des Fahrers positioniert werden sollen, um seine Übernahmefähigkeit sicherzustellen. Wenn die Hände dort korrekt positioniert werden, wird auch die Aufforderung (d. h. das Lichtsignal) eingestellt, wodurch die erfolgte Übernahme signalisiert werden kann.

Ein zweiter Aspekt der Erfindung betrifft ein Verfahren zum Markieren von Bereichen am Lenkrad im Rahmen einer Aufforderung zur Übernahme der Fahraufgabe von einem Fahrsystem zum automatisierten Fahren mit zumindest automatisierter Querführung. Das Verfahren weist die folgenden Schritte auf:
- während des automatisierten Fahrens, Feststellen, dass sich das Fahrzeug einem vorausliegenden Ende für das automatisierte Fahren derart genähert hat, dass eine bestimmte Näherungsbedingung erfüllt ist; und
- in Reaktion hierauf, Steuern von Mittel zum Markieren von Bereichen am Lenkrad derart, dass ein linker und ein rechter Markierungsbereich am Lenkrad markiert werden, so dass der Fahrer zur Übernahme der Fahraufgabe seine Hände an die markierten Bereiche am Lenkrad positioniert.

Die vorstehenden Ausführungen zum erfindungsgemäßen Fahrsystem nach dem ersten Aspekt der Erfindung gelten in entsprechender Weise auch für das erfindungsgemäße Verfahren nach dem zweiten Aspekt der Erfindung. An dieser Stelle und in den Patentansprüchen nicht explizit beschriebene vorteilhafte Ausführungsbeispiele des erfindungsgemäßen Verfahrens entsprechen den vorstehend beschriebenen oder in den Patentansprüchen beschriebenen vorteilhaften Ausführungsbeispielen des erfindungsgemäßen Fahrsystems.

Die Erfindung wird nachfolgend anhand zweier Ausführungsbeispiele unter Zuhilfenahme der beigefügten Zeichnungen beschrieben. In diesen zeigen:
- Fig. 1: ein Ausführungsbeispiel eines Lenkrads mit Lenkradanzeige;
- Fig. 2: ein beispielhaftes Ablaufdiagramm zur Steuerung der Lenkradanzeige;
- Fig. 3: eine beispielhafte Abfolge von Anzeigezuständen der Lenkradanzeige über dem zeitlichen Abstand Δt zum Endpunkt der Automatisierungsstrecke;
- Fig. 4: einen beispielhaften Leuchtzustand, in dem der linke Bereich und der rechte Bereich des Lenkradkranzes durch die leuchtenden Leuchtelemente markiert werden;
- Fig. 5: ein Ausführungsbespiel für eine Hands-On-Sensorik; und
- Fig. 6a - Fig. 6c: ein zweites Ausführungsbeispiel eines Lenkrads mit Lenkradanzeige.

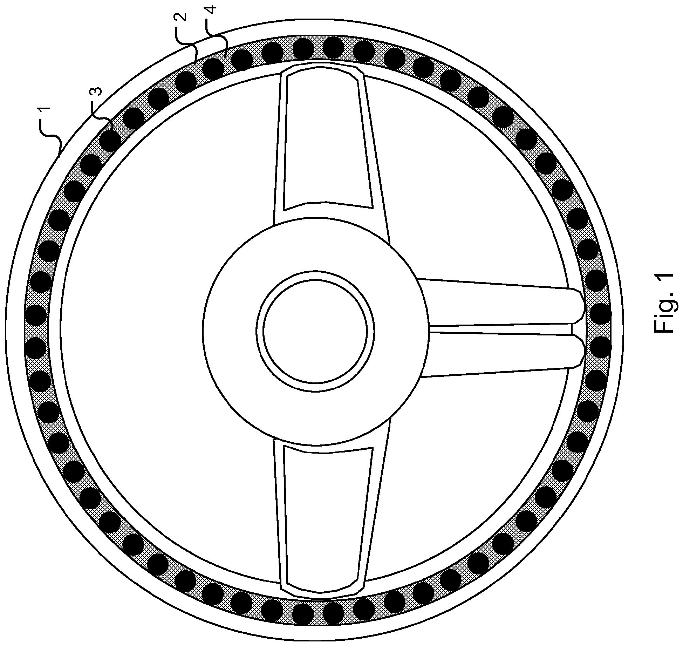

In Fig.1 ist ein Ausführungsbeispiel eines Lenkrads 1 mit Lenkradanzeige dargestellt. Die Lenkradanzeige weist eine Leuchtband-Struktur 2 in Form eines vorzugsweise geschlossenen Rings auf, die im Lenkradkranz integriert ist. Die Leuchtband-Struktur 2 umfasst eine Kette nebeneinander angeordneter gleichartiger Leuchtelemente 3. Bei den Leuchtelementen 3 handelt es sich beispielsweise um Leuchtdioden (LED - light emitting diode).

Jedes Leuchtelement 3 kann eine oder mehrere Leuchtdioden umfassen, beispielsweise zwei oder drei Dioden, insbesondere im Fall eines in verschiedenen Leuchtfarben leuchtfähigen Leuchtelements 3.

Die Leuchtelemente 3 sind vorzugsweise hinter einer im Lenkradkranz eingelassenen lichtdurchlässigen Schicht 4 angeordnet, durch die Licht abgestrahlt wird.

Die Leuchtelemente 3 können vorzugsweise einzeln angesteuert werden. Es ist von Vorteil, wenn die Leuchtelemente 3 in verschiedenen Farben leuchten können, beispielsweise in blau, gelb und rot.

Je nach Abstand, Anzahl der Leuchtelemente 3 und Streuung des Lichts kann der Leuchtcharakter der Leuchtband-Struktur 2 von einer im Wesentlichen homogenen Beleuchtung im Bereich der leuchtenden Leuchtelemente 3 bis hin zu einer eher losen Kette von Leuchtpunkten reichen.

Die Lenkrandzeige ist Teil einer Benutzerschnittstelle eines beispielhaften Fahrsystems zum automatisierten Fahren. Das Fahrsystem weist einen Fahrmodus zum hochautomatisierten Fahren mit automatisierter Längs- und Querführung auf, beispielsweise zum Fahren auf der Autobahn. Ferner sind weitere Fahrmodi mit geringerem Automatisierungsgrad denkbar, beispielsweise ein Fahrmodus zum teilautomatisierten Fahren mit automatisierter Längs- und Querführung sowie ein Fahrmodus zum assistierten Fahren mit automatisierter Längsführung und/oder ein anderer Fahrmodus zum assistierten Fahren mit automatisierter Querführung. Das nachfolgend anhand des Fahrmodus zum hochautomatisierten Fahren beschriebene Beispiel kann auch auf einen der anderen Automatisierungsgrade mit zumindest automatisierter Querführung übertragen werden.

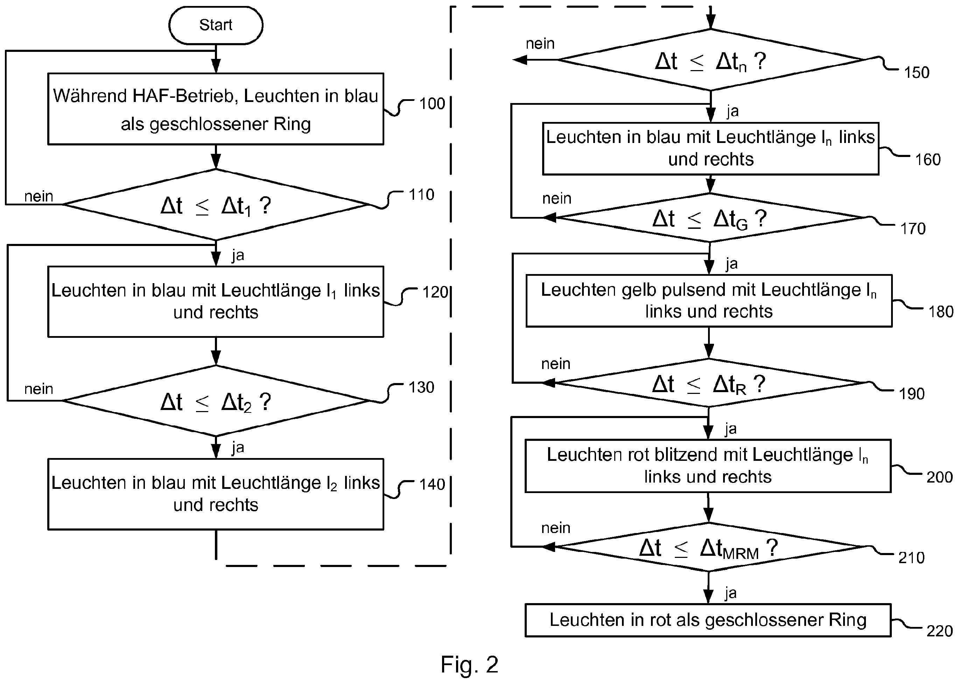

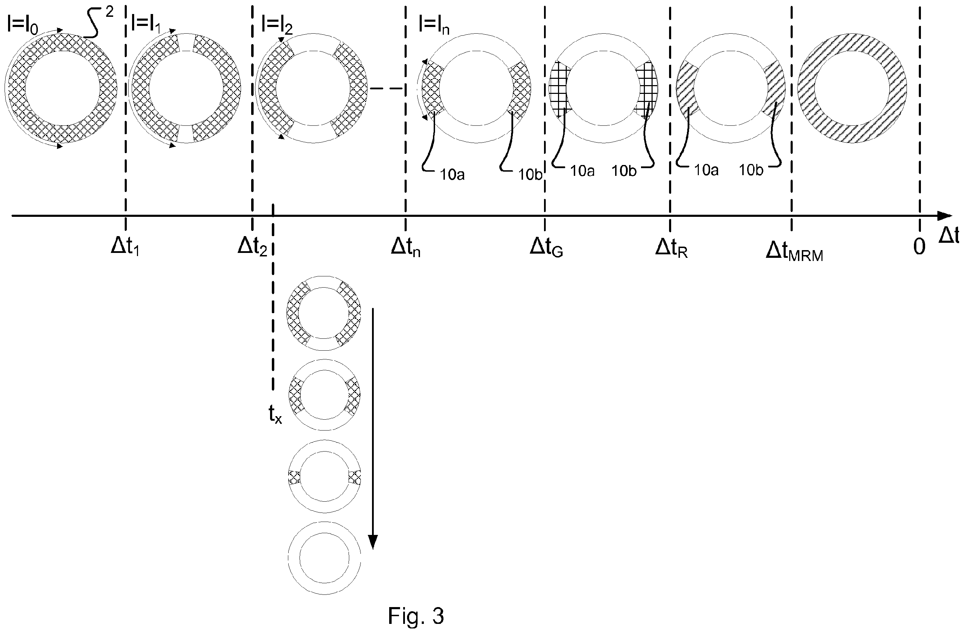

Nachfolgend wird in Verbindung mit Fig. 2 und Fig. 3 ein beispielhafter Ablauf der Lenkradanzeige bei abnehmender Restentfernung zu einem Endpunkt für das hochautomatisierte Fahren dargestellt.

Der Ablauf geht von einem Zustand aus, in dem der Fahrmodus zum hochautomatisierten Fahren aktiv ist und die Längs- und Querführung des Fahrzeugs vom Fahrsystem durchgeführt wird. In diesem Zustand leuchtet aufgrund entsprechender Ansteuerung der Lenkradanzeige die Leuchtband-Struktur 2 als geschlossener Ring in einer dem hochautomatisierten Fahren zugewiesenen ersten Farbe (s. Schritt 100); sämtliche Leuchtelemente 3 leuchten dafür in der ersten Leuchtfarbe, z. B. blau. Die Länge des rechten und linken Leuchtbereichs des Rings beträgt jeweils l₀. Es handelt es sich vorzugsweise um ein Dauerleuchten.

Basierend auf der Streckendistanz Δs zu einem bekannten Endpunkt für das hochautomatisierte Fahren und einer Prognose über die Geschwindigkeit bis zum Endpunkt wird laufend die aktuelle Zeitdistanz Δt zum Endpunkt für das hochautomatisierte Fahren geschätzt.

Zur Steuerung der Lenkradanzeige sind feste Zeitdistanzen Δt₁, Δt₂, ..., Δtₙ₋₁, Δtₙ, Δt_{G}, Δt_{R}, Δt_{MRM} zum Endpunkt für das hochautomatisierte Fahren mit n > 2 vordefiniert, wobei folgende Beziehung gilt:
Δt₁ > Δt₂ > Δt₂₊₁ ... > Δtₙ₋₁ > Δtₙ > Δt_{G} > Δt_{R}> Δt_{MRM}

Die Größe n gibt die Anzahl der Schritte an, mit der die Länge der in der ersten Leuchtfarbe leuchtenden Bereiche verringert wird, beispielsweise 5 Schritte.

Pro Reduktionsschritt werden eine definierte Anzahl der obersten und untersten Leuchtelemente 3, die vor der jeweiligen Längenreduktion noch in der ersten Leuchtfarbe leuchten, ausgeschaltet. Alternativ wäre es auch möglich, dass diese Leuchtelemente 3 auf eine andere Leuchtfarbe umschalten. Die Längenreduktion erfolgt für die linke und rechte Seite der Leuchtanzeige in gleicher Weise. Die Abnahme von oben und unten kann im Wesentlichen symmetrisch erfolgen; dies ist jedoch nicht zwingend.

Nachdem die aktuelle Zeitdistanz Δt kleiner gleich der vorgegebenen Zeitdistanz Δt₁ geworden ist (s. Abfrage 110 in Fig. 2), wird die Leuchtlänge l, mit der der linke bzw. rechte Teil der Lenkradanzeige in blau leuchtet, auf die Länge l = l₁ reduziert (s. Fig. 3 und Schritt 120 in Fig. 2), indem eine definierte Menge der obersten und untersten in der ersten Leuchtfarbe leuchtenden Leuchtelemente 3 ausgeschaltet werden. Mit Reduktion der Länge könnte vom Dauerleuchten auch in ein blinkendes Leuchten umgeschaltet werden.

Nachdem die aktuelle Zeitdistanz Δt kleiner gleich der vorgegebenen Zeitdistanz Δt₂ geworden ist (s. Abfrage 130 in Fig. 3), wird die Leuchtlänge l, mit der der linke bzw. rechte Teil der Lenkradanzeige in der ersten Leuchtfarbe leuchtet, auf die Länge l = l₂ reduziert (s. Fig. 3 und Schritt 140), indem eine weitere definierte Menge der obersten und untersten in der ersten Leuchtfarbe leuchtenden Leuchtelemente 3 ausgeschaltet werden.

Sofern der Fahrer die Fahraufgabe nicht übernimmt, wird die Länge mit Erreichen der einzelnen Zeitdistanzen ti sukzessive reduziert, bis die Länge l, mit der der linke bzw. rechte Teil des Lenkradanzeige in der ersten Leuchtfarbe leuchtet, auf die minimale Länge l = lₙ > 0 reduziert wird (s. Schritt 160), nachdem die Zeitdistanz Δtₙ zum Endpunkt für das automatisierte Fahren erreicht wurde (s. die Abfrage 150). Alternativ wäre es auch denkbar, dass die Länge mit Erreichen der einzelnen Zeitdistanzen ti sukzessive auf null reduziert wird.

Der in der Leuchtfarbe leuchtende Bereich minimaler Länge lₙ der linken und der rechten Hälfte markiert den linken Berührbereich 10a bzw. rechten Berührbereich 10b zum Berühren des Lenkrads 1.

Sofern der Fahrer die Fahraufgabe nicht übernimmt, wird nach Erreichen der Zeitdistanz Δt_{G} (s. Abfrage 170) die Leuchtfarbe von der ersten Leuchtfarbe auf eine zweite Leuchtfarbe umgeschaltet (s. Schritt 180), die im Vergleich zur ersten Leuchtfarbe einen höheren Warncharakter hat (z. B. auf die Farbe Gelb). Hierbei wird die minimale Länge lₙ beibehalten. Sofern in der alternativen Ausgestaltung vorher bereits die Länge l auf null reduziert wurde, wird die Länge entsprechend erhöht. Vorzugsweise handelt es sich um ein pulsendes Leuchten.

Sofern der Fahrer die Fahraufgabe nicht übernimmt, wird nach Erreichen der Zeitdistanz Δt_{R} (s. Abfrage 190) die Leuchtfarbe von der zweiten Leuchtfarbe auf eine dritte Leuchtfarbe umgeschaltet (s. Schritt 200), die im Vergleich zur zweiten Leuchtfarbe einen höheren Warncharakter hat (z. B. auf die Farbe Rot). Hierbei wird die Länge lₙ beibehalten. Vorzugsweise handelt es sich um ein blitzendes Leuchten.

Sofern der Fahrer die Fahraufgabe nicht übernimmt, wird nach Erreichen der Zeitdistanz Δt_{MRM} (s. Abfrage 2100) die Lenkradanzeige so angesteuert, dass der Leuchtring als geschlossener Ring in der zweiten Leuchtfarbe leuchtet (s. Schritt 220). Hierbei handelt es sich vorzugsweise um ein Dauerleuchten. Vorzugsweise ist vorgesehen, dass das Fahrzeug dann ein Nothaltemanöver durchführt.

Vorstehend wurde davon ausgegangen, dass anfänglich die Zeitdistanz Δt größer als Δt₁ ist. Sofern jedoch erst nach Erreichen der Zeitdistanz Δt₁ festgestellt wird, dass ein Ende der Automatisierung voraus liegt, wird der der Zeitdistanz Δt zugehörige Leuchtzustand angenommen und danach bei weiterer Abnahme der Zeitdistanz der Leuchtzustand entsprechend der vorstehenden Beschreibung verändert. Sofern dabei die verbleibende Zeitdauer für den Leuchtzustand ein bestimmtes Maß unterschreitet, kann direkt auf den in der Abfolge nachfolgenden Leuchtzustand gewartet werden oder entsprechend früher direkt in diesen Leuchtzustand gewechselt werden.

Sofern ausgehend von der Ausgangslänge l₀ ein Leuchtzustand mit Leuchten in der ersten Farbe und reduzierter Leuchtlänge lᵢ angenommen werden soll, kann die Leuchtlänge ausgehend von der Ausgangslänge l₀ schrittweise in schneller Abfolge auf die Ziellänge lᵢ reduziert werden.

Zumindest nach Erreichen der Zeitdistanz Δt₁ kann der Fahrer die Fahraufgabe übernehmen, indem der Fahrer die Hände an das Lenkrad 1 nimmt. Über eine Hands-On-Sensorik im Lenkrad wird erkannt, wenn der Fahrer die Hände an das Lenkrad 1 nimmt. In Reaktion hierauf werden die in der ersten Leuchtfarbe leuchtenden restlichen Bereiche der Lenkradanzeige in schneller Abfolge auf null reduziert und die Fahraufgabe wird an den Fahrer übergeben. Diese Reaktion kann davon abhängig sein, ob eine oder mehrere optionale weitere Bedingungen erfüllt sind, beispielsweise ob der Fahrer auf die vorausliegende Verkehrssituation schaut. Die schnelle Abnahme auf null signalisiert dem Fahrer die Übergabe der Fahraufgabe an den Fahrer. In Fig. 3 ist im unteren Bereich des Diagramms ein beispielhaftes Verhalten der Lenkradanzeige dargestellt, wenn der Fahrer zum Zeitpunkt tₓ die Hände an das Lenkrad nimmt, um die Fahraufgabe zu übernehmen.

Sofern bereits die Leuchtzustände gemäß Schritt 160, 180 und 200 erreicht wurden, in denen der linke und rechte Berührbereich 10a, 10b markiert werden, wird bei Erkennen des Anlegen der Hände an das Lenkrad (und ggf. Erfüllen einer oder mehrerer optionaler weitere Bedingungen) das jeweilige Leuchtsignal beendet und die Fahraufgabe an den Fahrer übergeben.

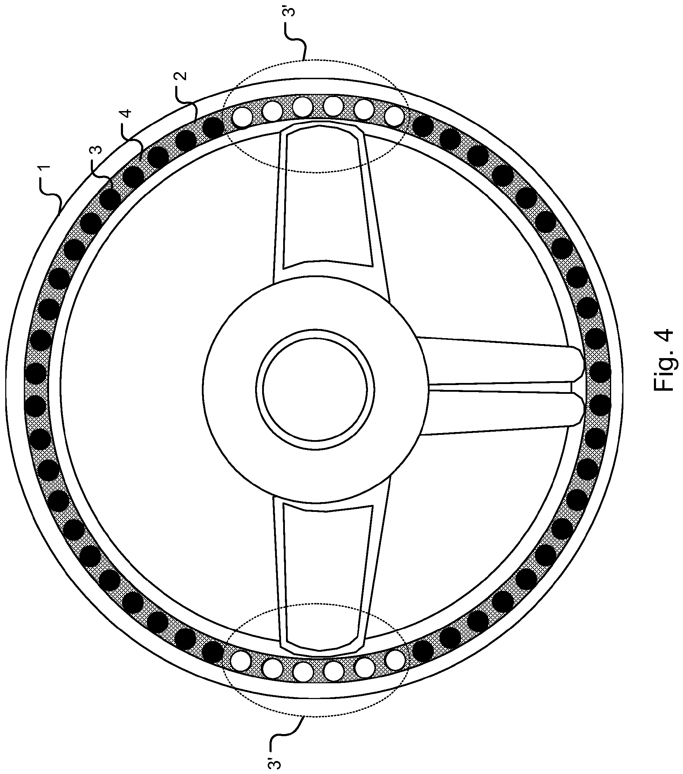

In Fig. 4 ist ein beispielhafter Leuchtzustand der Leuchtelemente 3 dargestellt, in denen der linke Bereich 10a und der rechte Bereich 10b des Lenkradkranzes durch die leuchtenden Leuchtelemente markiert werden (s. Schritt 160, 180, 200). In Fig. 4 sind die aktuell leuchtenden Leuchtelemente 3 durch das Bezugszeichen 3' markiert und in weiß dargestellt. In Schritt 160 ist die Leuchtfarbe Blau, in Schritt 180 ist die Leuchtfarbe Gelb und in Schritt 200 ist die Leuchtfarbe Rot.

Sofern auf den vorstehend beschriebenen Countdown verzichtet wird und aus Fig. 2 lediglich die Leuchtzustände gemäß Schritt 180 und 200 vorgesehen werden, könnte auch mittels einer entsprechend ausgestaltet Hands-On-Sensorik geprüft werden, ob der Fahrer tatsächlich die Hände an den markierten Bereichen 10a, 10b positioniert, und in Abhängigkeit davon die Übergabe erfolgen.

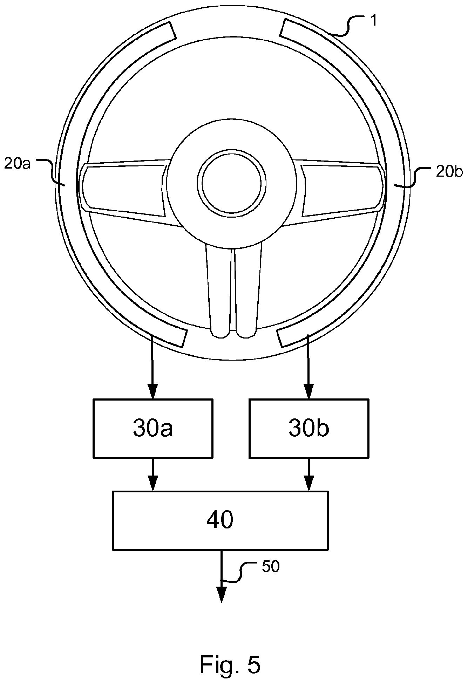

In Fig. 5 ist ein Ausführungsbeispiel einer hierfür geeigneten Hands-On-Detektionsvorrichtung für ein Lenkrad 1 schematisch dargestellt. Hierbei ist zumindest die Sensorik im Lenkrad 1, insbesondere im Lenkradkranz, integriert; die Auswertung kann innerhalb oder außerhalb des Lenkrads 1 erfolgen.

Die Hands-On-Detektionseinrichtung umfasst einen ersten Teilsensor 20a, der in der linken Hälfte des Lenkradkranzes integriert ist, und einen zweiten Teilsensor 20b, der in der rechten Hälfte des Lenkradkranzes integriert ist. Bei den Teilsensoren 20a und 20b handelt es sich beispielsweise um zwei kapazitive Sensormatten. Die von den Teilsensoren 20a und 20b abgedeckten Sensorbereiche umfassen zumindest die Markierungsbereiche 10a und 10b und gehen vorzugsweise oben und unten noch darüber hinaus. Alternativ entsprechen die Sensorbereiche den Markierungsbereichen 10a und 10b im Wesentlichen.

Der erste Teilsensor 20a ist mit einer ersten Teil-Auswerte-Einheit 30a elektrisch verbunden, die eingerichtet ist festzustellen, ob der Fahrer mit der linken Hand das Lenkrad im Sensorbereich des Teilsensors 20a berührt, beispielsweise durch Messen einer für die Kapazität charakteristischen Größe, die bei Berühren des von dem jeweiligen Teilsensor überwachten Lenkradbereichs einer Veränderung unterworfen ist. Der zweite Teilsensor 20b ist mit einer zweiten Teil-Auswerte-Einheit 30b elektrisch verbunden, die eingerichtet ist festzustellen, ob der Fahrer mit der rechten Hand das Lenkrad 1 im Sensorbereich des Teilsensors 20b berührt, beispielsweise durch Messen eine für die Kapazität charakteristischen Größe.

Anhand der vorzugsweise digitalen Auswerte-Signale der beiden Teil-Auswerte-Einheiten 30a, 30b, die jeweils angeben, ob mittels des jeweiligen Teilsensors 20a, 20b ein Berühren mit der linken bzw. rechten Hand in den jeweiligen Sensorbereichen feststellt wurde, kann in der Auswerte-Einheit 40 ermittelt werden, ob
- lediglich eine einzige Hand am Lenkrad 1 an den Sensorbereichen anliegt,
- beide Hände am Lenkrad 1 an den beiden Sensorbereichen anliegen oder
- keine Hand an den Sensorbereichen am Lenkrad 1 anliegt.

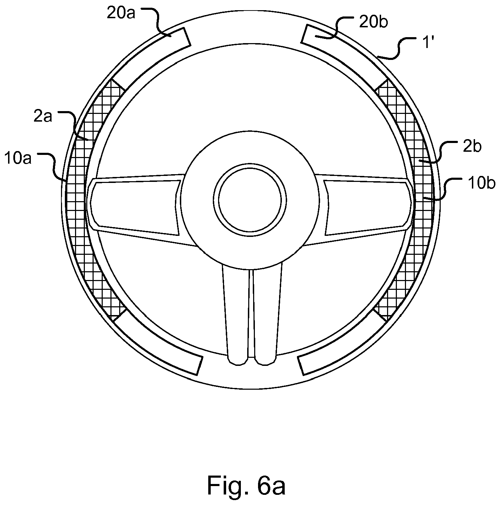

In Fig. 6a ist ein weiteres Ausführungsbeispiel für ein Lenkrad 1' mit Lenkradanzeige dargestellt. Das Lenkrad 1' umfasst eine Hands-On-Detektionsvorrichtung, die unterscheiden kann, ob das Lenkrad nur mit der linken Hand angefasst wird, ob das Lenkrad nur mit der rechten Hand angefasst wird oder ob das Lenkrad mit beiden Händen angefasst wird. Nachfolgend wird angenommen, dass das Lenkrad 1 die in Fig.5 dargestellte Hands-On-Detektionsvorrichtung mit den Teilsensoren 20a und 20b umfasst. Die Leuchtband-Struktur ist in diesem Beispiel nicht als geschlossener Ring realisiert, sondern umfasst zwei Leuchtband-Bögen, einen linken Leuchtband-Bogen 2a und einen rechten Leuchtband-Bogen 2b, die vorzugsweise wieder einzelne Leuchtelemente umfassen, wie dies vorstehend beschrieben wurde. Es könnte aber auch ein geschlossener Ring als Leuchtband vorgesehen werden, wobei in diesem Fall der obere und untere Bereich für die Übernahmeaufforderung nicht verwendet werden.

In Fig. 6a ist der Zustand dargestellt, in dem die Übernahmeaufforderung aktiv ist und der linke und rechte Markierungsbereich 10a bzw. 10b markiert werden, indem der linke bzw. rechte Leuchtband-Bogen 2a und 2b entsprechend leuchten, beispielsweise in einer bestimmten Leuchtfarbe (z. B. rot) und/oder blinken.

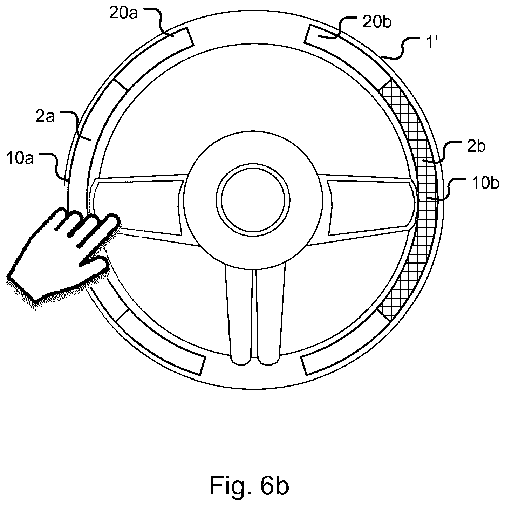

In Fig. 6b ist der Zustand dargestellt, wenn der Fahrer ausgehend von dem Zustand in Fig. 6a das Lenkrad 1' mit nur einer Hand anfasst. Das Quittieren der Übernahmeaufforderung mit nur einer Hand (hier: die linke Hand) deaktiviert die Markierung des dieser Hand zugeordneten Markierungsbereichs (hier des Markierungsbereichs 10a). Bei der Verwendung zweier Leuchtband-Bogen 2a und 2b wird beispielsweise der dieser Hand zugeordnete Leuchtband-Bogen deaktiviert. Alternativ könnte auch die Farbe geändert werden, z. B. von rot auf gelb oder von rot auf grün. Die Markierung des jeweils anderen Markierungsbereichs (hier: des Bereichs 10b) ist weiterhin aktiv und signalisiert dadurch dass der Fahrer das Lenkrad auch mit der zweiten Hand anfassen muss. Wenn der Fahrer die Hand vom Lenkrad wegnimmt (hier die linke Hand), führt dies wieder in Zustand der Fig. 6a zurück, indem beide Markierungsbereiche 10a und 10b wie vorher markiert sind.

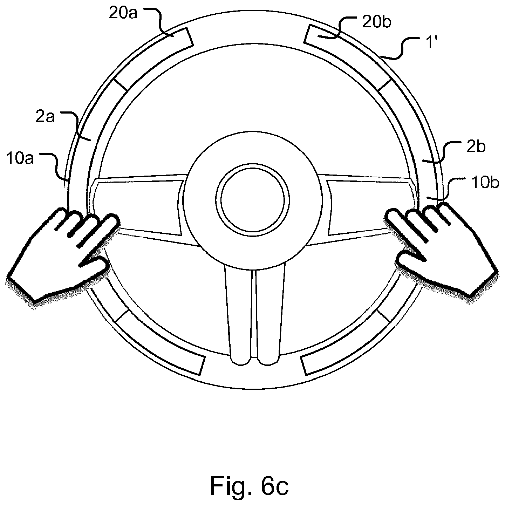

In Fig. 6c ist der Zustand dargestellt, wenn der Fahrer das Lenkrad 1' auf die Übernahmeaufforderung hin mit beiden Händen anfasst (beispielsweise ausgehend von dem Zustand in Fig. 6b). Beide Markierungsbereiche 10a und 10b sind jetzt deaktiviert bzw. oder haben ihre Leuchtfarbe gegenüber dem Zustand in Fig. 6a geändert. Die Quittierung ist erst vollständig, wenn erkannt wird, dass beide Hände gleichzeitig am Lenkrad anliegen. Hierdurch ist ein ungewolltes Quittieren der Übernahmeaufforderung sehr unwahrscheinlich.

## Patentansprüche

1. Fahrsystem zum automatisierten Fahren mit zumindest automatisierter Querführung für ein Kraftfahrzeug, wobei das Fahrsystem umfasst
- Mittel (2) zum Markieren von Bereichen (10a, 10b) am Lenkrad (1), wobei das Fahrsystem eingerichtet ist,
- während des automatisierten Fahrens festzustellen, dass sich das Fahrzeug einem vorausliegenden Ende für das automatisierte Fahren derart genähert hat, dass eine erste Näherungsbedingung erfüllt ist,
- in Reaktion hierauf die Mittel (2) zum Markieren von Bereichen am Lenkrad derart zu steuern, dass ein linker (10a) und ein rechter (10b) Markierungsbereich am Lenkrad (1) markiert werden, so dass der Fahrer zur Übernahme der Fahraufgabe seine Hände an die markierten Bereiche am Lenkrad (1) positioniert, wobei zur Übernahme der Fahraufgabe das Lenkrad mit beiden Händen anzufassen ist,
- festzustellen, ob der Fahrer das Lenkrad mit der linken Hand anfasst, und in Reaktion hierauf die Markierung des linken Markierungsbereichs (10a) einzustellen oder zu verändern, und
- festzustellen, ob der Fahrer das Lenkrad mit der rechten Hand anfasst, und in Reaktion hierauf die Markierung des rechten Markierungsbereichs (10b) einzustellen oder zu verändern.

2. Fahrsystem nach Anspruch 1, wobei die Mittel zum Markieren von Bereichen am Lenkrad eingerichtet sind, einen linken (10a) und einen rechten (10b) Markierungsbereich am Lenkradkranz zu markieren.

3. Fahrsystem nach einem der vorhergehenden Ansprüche, wobei die Mittel zum Markieren von Bereichen eine optische Lenkradanzeige umfassen.

4. Fahrsystem nach Anspruch 3, wobei die Lenkradanzeige eine Leuchtband-Struktur (2) aufweist, die im Lenkradkranz integriert ist und insbesondere
- ringförmig ist oder
- ein linkes und einen rechtes Leuchtband umfasst.

5. Fahrsystem nach Anspruch 4, wobei das Fahrsystem eingerichtet ist,
- in Reaktion, dass sich das Fahrzeug einem vorausliegenden Ende für das automatisierte Fahren derart genähert hat, dass die erste Näherungsbedingung erfüllt ist, die Lenkradanzeige derart zu steuern, dass die Leuchtband-Struktur (2) an dem linken (10a) und rechten (10b) Markierungsbereich des Lenkradkranzes zur Markierung dieser Bereiche leuchtet, und
- die Lenkradanzeige derart zu steuern, dass vorher während des automatisierten Fahrens die Leuchtband-Struktur (2) als Ring leuchtet oder zumindest in Bereichen leuchtet, die den linken (10a) und den rechten (10b) Markierungsbereich umfassen und darüber hinausgehen.

6. Fahrsystem nach einem der vorhergehenden Ansprüche, wobei das Fahrsystem eingerichtet ist,
- festzustellen, ob der Fahrer das Lenkrad anfasst, und
- in Reaktion hierauf die Markierung der beiden Bereiche (10a, 10b) einzustellen oder zu verändern, um die Übergabe der Fahraufgabe an den Fahrer zu signalisieren.

7. Fahrsystem nach einem der vorhergehenden Ansprüche, wobei das Fahrsystem eingerichtet ist,
- festzustellen, ob der Fahrer das Lenkrad an einem linken Bereich des Lenkrads und/oder an einem rechten Bereich des Lenkrads anfasst, und
- in Reaktion hierauf die Markierung der beiden Bereiche (10a, 10b) einzustellen oder zu verändern, um die Übergabe der Fahraufgabe an den Fahrer zu signalisieren.

8. Fahrsystem nach einem der vorhergehenden Ansprüche, wobei das Fahrsystem eingerichtet ist,
- festzustellen, dass der Fahrer nach Anfassen des Lenkrads mit der linken bzw. rechten Hand das Anfassen des Lenkrads mit dieser Hand beendet hat, und
- in Reaktion hierauf, zurücknehmen, dass die Markierung des der Hand zugeordneten Markierungsbereichs (10a, 10b) eingestellt wurde bzw. verändert wurde.

9. Fahrsystem nach Anspruch 4 oder einem der auf Anspruch 4 rückbezogenen Ansprüche 5 bis 8, wobei die Leuchtband-Struktur (2) in einer Leuchtfarbe mit je nach Ansteuerung veränderbarer Länge leuchtfähig ist und einen linken und einen rechten Teil umfasst, und wobei das Fahrsystem eingerichtet ist,
- die Lenkradanzeige derart zu steuern, dass während des automatisierten Fahrens die Leuchtband-Struktur (2) auf einer Ausgangslänge leuchtet,
- festzustellen, dass sich das Fahrzeug einem vorausliegenden Endpunkt für das automatisierte Fahren derart genähert hat, dass eine zweite Näherungsbedingung erfüllt ist, und
- in Reaktion hierauf die Lenkradanzeige derart zu steuern, dass bei sukzessiv abnehmender Entfernung zu dem Endpunkt für das automatisierte Fahren der linke und der rechte Teil der Leuchtband-Struktur (2) jeweils mit sukzessiv abnehmender Länge leuchten, wobei die Beleuchtung ausgehend vom oberen und/oder unteren Bereich der Leuchtband-Struktur (2) abnimmt, wobei die Länge auf eine definierte minimale Länge (lₙ) reduziert wird, und wobei der leuchtende Bereich minimaler Länge (lₙ) des linken und des rechten Teils jeweils dem linken und dem rechten Markierungsbereich (10a, 10b) entspricht.

10. Verfahren zum Markieren von Bereichen (10a, 10b) am Lenkrad (1) im Rahmen einer Aufforderung zur Übernahme der Fahraufgabe von einem Fahrsystem zum automatisierten Fahren mit zumindest automatisierter Querführung, wobei zur Übernahme der Fahraufgabe das Lenkrad mit beiden Händen anzufassen ist, mit den Schritten:
- während des automatisierten Fahrens, Feststellen, dass sich das Fahrzeug einem vorausliegenden Ende für das automatisierte Fahren derart genähert hat, dass eine bestimmte Näherungsbedingung erfüllt ist,
- in Reaktion hierauf, Steuern von Mittel zum Markieren von Bereichen (10a, 10b) am Lenkrad derart, dass ein linker (10a) und ein rechter (10b) Markierungsbereich am Lenkrad (1) markiert werden, so dass der Fahrer zur Übernahme der Fahraufgabe seine Hände an die markierten Bereiche am Lenkrad (1) positioniert,
- Feststellen, ob der Fahrer das Lenkrad mit der linken Hand anfasst, und in Reaktion hierauf Einstellen oder Verändern der Markierung des linken Markierungsbereichs (10a), und
- Feststellen, ob der Fahrer das Lenkrad mit der rechten Hand anfasst, und in Reaktion hierauf Einstellen oder Verändern der Markierung des rechten Markierungsbereichs (10b).

## Claims

1. Driving system for automated driving with at least automated transverse guidance for a motor vehicle, wherein the driving system comprises
- means (2) for marking regions (10a, 10b) on the steering wheel (1),
wherein the driving system is configured
- to establish during automated driving that the vehicle has approached an end of automated driving lying ahead such that a first proximity condition is satisfied,
- to react thereto by controlling the means (2) for marking regions on the steering wheel such that a left-hand (10a) and a right-hand (10b) marking region are marked on the steering wheel (1), so that the driver positions his hands on the marked regions on the steering wheel (1) to accept the driving task, wherein acceptance of the driving task requires the steering wheel to be touched with both hands,
- to establish whether the driver touches the steering wheel with his left hand, and to react thereto by stopping or altering the marking of the left-hand marking region (10a), and
- to establish whether the driver touches the steering wheel with his right hand, and to react thereto by stopping or altering the marking of the right-hand marking region (10b).

2. Driving system according to Claim 1, wherein the means for marking regions on the steering wheel are configured to mark a left-hand (10a) and a right-hand (10b) marking region on the steering wheel rim.

3. Driving system according to either of the preceding claims, wherein the means for marking regions comprise a visual steering wheel display.

4. Driving system according to Claim 3, wherein the steering wheel display has a light-emitting band structure (2) that is integrated in the steering wheel rim and in particular
- is annular or
- comprises a left-hand and a right-hand light-emitting band.

5. Driving system according to Claim 4, wherein the driving system is configured
- to react to the vehicle having approached an end of automated driving lying ahead such that the first proximity condition is satisfied by controlling the steering wheel display such that the light-emitting band structure (2) at the left-hand (10a) and right-hand (10b) marking region of the steering wheel rim glows to mark these regions, and
- to control the steering wheel display such that beforehand during automated driving the light-emitting band structure (2) glows as a ring or at least glows in regions that comprise the left-hand (10a) and the right-hand (10b) marking region and go beyond them.

6. Driving system according to one of the preceding claims, wherein the driving system is configured
- to establish whether the driver touches the steering wheel, and
- to react thereto by stopping or altering the marking of the two regions (10a, 10b) in order to signal handover of the driving task to the driver.

7. Driving system according to one of the preceding claims, wherein the driving system is configured
- to establish whether the driver touches the steering wheel at a left-hand region of the steering wheel and/or at a right-hand region of the steering wheel, and
- to react thereto by stopping or altering the marking of the two regions (10a, 10b) in order to signal handover of the driving task to the driver.

8. Driving system according to one of the preceding claims, wherein the driving system is configured
- to establish that the driver, after touching the steering wheel with his left or right hand, has finished touching the steering wheel with his hand, and
- to react thereto by revoking the circumstance that the marking of the marking region (10a, 10b) associated with the hand has been stopped or has been altered.

9. Driving system according to Claim 4 or one of Claims 5 to 8, dependent on Claim 4, wherein the light-emitting band structure (2) is capable of emitting light in an emitted-light colour of length alterable depending on actuation and comprises a left-hand and a right-hand portion, and
wherein the driving system is configured
- to control the steering wheel display such that during automated driving the light-emitting band structure (2) glows over an initial length,
- to establish that the vehicle has approached an end of automated driving lying ahead such that a second proximity condition is satisfied, and
- to react thereto by controlling the steering wheel display such that a progressively decreasing distance from the end of automated driving results in the left-hand and the right-hand portion of the light-emitting band structure (2) each glowing with progressively decreasing length, wherein the illumination decreases starting from the upper and/or lower region of the light-emitting band structure (2), wherein the length is reduced to a defined minimum length (lₙ), and wherein the light-emitting region of minimum length (lₙ) of the left-hand and the right-hand portion corresponds in each case to the left-hand and the right-hand marking region (10a, 10b).

10. Method for marking regions (10a, 10b) on the steering wheel (1) within the framework of a request to accept the driving task from a driving system for automated driving with at least automated transverse guidance, wherein acceptance of the driving task requires the steering wheel to be touched with both hands, having the steps of:
- establishing during automated driving that the vehicle has approached an end of automated driving lying ahead such that a specific proximity condition is satisfied,
- reacting thereto by controlling means for marking regions (10a, 10b) on the steering wheel such that a left-hand (10a) and a right-hand (10b) marking region are marked on the steering wheel (1), so that the driver positions his hands on the marked regions on the steering wheel (1) to accept the driving task,
- establishing whether the driver touches the steering wheel with his left hand, and reacting thereto by stopping or altering the marking of the left-hand marking region (10a), and
- establishing whether the driver touches the steering wheel with his right hand, and reacting thereto by stopping or altering the marking of the right-hand marking region (10b).

## Revendications

1. Système de conduite destiné à la conduite automatisée et comprenant au moins un guidage transversal automatisé d'un véhicule automobile, le système de conduite comprenant
- des moyens (2) de marquage de zones (10a, 10b) sur le volant (1),
le système de conduite étant adapté
- pour déterminer au cours de la conduite automatisée si le véhicule s'est rapproché d'une fin à venir de la conduite automatisée de manière qu'une première condition de proximité soit remplie,
- pour commander en réaction les moyens (2) de marquage de zones sur le volant de manière qu'une zone de marquage gauche (10a) et une zone de marquage droite (10b) soient marquées sur le volant (1) pour que le conducteur positionne ses mains sur les zones marquées sur le volant (1) afin de prendre en charge la tâche de conduite, le volant devant être saisi à deux mains pour prendre en charge la conduite,
- pour déterminer si le conducteur saisit le volant avec la main gauche, et pour régler ou modifier en réaction le marquage de la zone de marquage gauche (10a), et
- pour déterminer si le conducteur saisit le volant avec la main droite, et pour régler ou modifier en réaction le marquage de la zone de marquage droite (10b).

2. Système de conduite selon la revendication 1, les moyens de marquage de zones sur le volant étant adaptés pour marquer une zone de marquage gauche (10a) et une zone de marquage droite (10b) sur la couronne du volant.

3. Système de conduite selon l'une des revendications précédentes, les moyens de marquage de zones comprenant un affichage visuel au volant.

4. Système de conduite selon la revendication 3, l'affichage au volant comportant une structure de bande lumineuse (2) qui est intégrée dans la couronne du volant et en particulier qui
- est annulaire ou
- comprend une bande lumineuse gauche et une bande lumineuse droite.

5. Système de conduite selon la revendication 4, le système de conduite étant adapté
- pour commander, en réaction au fait que le véhicule s'est rapproché d'une fin à venir de la conduite automatisée de telle manière que la première condition d'approche soit remplie, l'affichage au volant de manière que la structure de bande lumineuse (2) s'allume au niveau de la zone de marquage gauche (10a) et de la zone de marquage droite (10b) de la couronne du volant pour marquer ces zones, et
- pour commander l'affichage au volant de manière que la structure de bande lumineuse (2) au préalable pendant la conduite automatisée s'allume en anneau ou s'allume au moins dans des zones qui comprennent la zone de marquage gauche (10a) et la zone de marquage droite (10b) et qui vont au-delà.

6. Système de conduite selon l'une des revendications précédentes, le système de conduite étant adapté
- pour déterminer si le conducteur saisit le volant, et
- pour régler ou modifier en réaction le marquage des deux zones (10a, 10b) afin de signaler le transfert de la tâche de conduite au conducteur.

7. Système de conduite selon l'une des revendications précédentes, le système de conduite étant adapté
- pour déterminer si le conducteur saisit le volant au niveau d'une zone gauche du volant et/ou d'une zone droite du volant, et
- pour régler ou modifier en réaction le marquage des deux zones (10a, 10b) afin de signaler le transfert de la tâche de conduite au conducteur.

8. Système de conduite selon l'une des revendications précédentes, le système de conduite étant adapté
- pour déterminer si, après avoir saisi le volant avec la main gauche ou droite, le conducteur a fini de saisir le volant avec cette main et
- pour revenir en réaction sur le fait que le marquage de la zone de marquage (10a, 10b), associée à la main, a été réglé ou modifié.

9. Système de conduite selon la revendication 4 ou l'une des revendications 5 à 8 qui renvoient à la revendication 4, la structure de bande lumineuse (2) étant lumineuse dans une couleur de lumière de longueur variable en fonction de la commande et comprenant une partie gauche et une partie droite, et
le système de conduite étant adapté
- pour commander l'affichage au volant de telle sorte que la structure de bande lumineuse (2) s'allume à une longueur initiale pendant la conduite automatisée,
- pour déterminer si le véhicule s'est rapproché d'une fin à venir de la conduite automatisée de telle sorte qu'une deuxième condition d'approche soit remplie, et
- pour commander en réaction l'affichage au volant de telle sorte que les parties gauche et droite de la structure de bande lumineuse (2) s'allument chacune avec une longueur successivement décroissante à mesure que la distance décroît successivement jusqu'à la fin de la conduite automatisée, l'éclairage décroissant à partir de la zone supérieure et/ou inférieure de la structure de bande lumineuse (2), la longueur étant réduite à une longueur minimale définie (lₙ), et la zone lumineuse de longueur minimale (lₙ) de la partie gauche et de la partie droite correspondant respectivement aux zones de marquage gauche et droite (10a, 10b).

10. Procédé de marquage de zones (10a, 10b) au niveau du volant (1) dans le cadre d'une demande de prise en charge de la tâche de conduite d'un système de conduite automatisée comprenant au moins guidage transversale automatisé, le volant devant être saisi à deux mains pour prendre en charge la tâche de conduite, le procédé comprenant les étapes suivantes :
- déterminer pendant la conduite automatisée si le véhicule s'est rapproché d'une fin à venir de la conduite automatisée de manière qu'une première condition de proximité soit remplie,
- commander en réaction des moyens de marquage de zones (10a, 10b) sur le volant de manière qu'une zone de marquage gauche (10a) et une zone de marquage droite (10b) soient marquées sur le volant (1) de sorte que le conducteur positionne ses mains sur les zones marquées sur le volant (1),
- déterminer si le conducteur saisit le volant avec la main gauche, et régler ou modifier en réaction le marquage de la zone de marquage gauche (10a), et
- déterminer si le conducteur saisit le volant avec la main droite, et régler ou modifier en réaction le marquage de la zone de marquage droite (10b).
